Europäisches Patentamt

European Patent Office

Office européen des brevets

(19)

(11) **EP 1 357 714 A1**

(12) **EUROPEAN PATENT APPLICATION**

(43) Date of publication:
**29.10.2003 Bulletin 2003/44**

(51) Int Cl.⁷: **H04L 25/02**, H04L 27/26,
H04B 1/707

(21) Application number: **02425260.3**

(22) Date of filing: **23.04.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Siemens Information and
Communication Networks S.p.A.**
**20126 Milano (IT)**

(72) Inventors:
• **Nicoli, Monica Barbara**
**24052 Azzano San Paolo (IT)**

• **Simeone, Osvaldo**
**20145 Milano (IT)**
• **Spagnolini, Umberto**
**20046 Biassono (IT)**
• **Aldrovandi, Matteo**
**40122 Bologna (IT)**

(74) Representative: **Giustini, Delio**
**Siemens Information and Communication
Networks S.p.A.,
Palazzo Gorky
Via Monfalcone, 1
20092 Cinisello Balsamo (IT)**

(54) **Method and device for channel estimation in digital radio communication systems**

(57)     A method of channel estimation for slotted radio communication systems, in particular, mobile communication systems determines (101) a least squares estimate of the channel and refines such estimate by a noise reduction through a Reduced-Complexity approach (108 to 115). The refinement includes determination of spatial and temporal subspaces (109, 110) respectively comprising the actual directions of arrival of the signal among all distinguishable directions and the actual times of arrival of the signal among all distinguishable times of arrival, and the projection (111 to 114) of the least squares estimate on said subspaces.

FIG. 3

EP 1 357 714 A1

**Description**

FIELD OF THE INVENTION

The present invention concerns digital radio communication systems, and more particularly it concerns a method of and a device for estimating the transmission channel at the receiver of one such system where data are received by a multiple antenna.

Preferably, but non exclusively, the invention is concerned with estimation of the up-link channel at the receiver of a base station of a mobile communication system using slotted transmission techniques, and it will be described in connection with that preferred application. By way of example, reference will be made hereinafter to a time-slotted system, such as TDMA (Time Division Multiple Access) or TD-SCDMA (Time Division - Synchronous Code Division Multiple Access).

BACKGROUND OF THE INVENTION

In a mobile communication system, the signals transmitted by a mobile terminal are received at a receiving antenna after having undergone, i. a., a distortion due to multipath propagation. To allow a proper decoding, an estimate of the channel is necessary. In most existing and future mobile communication systems, such as the GSM and the UMTS, the multipath-fading channel is estimated from a sequence of known training symbols present in a specific position of the frame.

The accuracy of the estimation depends in substantially inverse manner on the ratio between the number of channel parameters to be estimated and the length of the training sequence. In this respect, a first problem arises in that training sequences should be relatively short, for reasons of transmission efficiency. A second problem is that, in the actual and future generation of wireless communication networks, use is made of multiple antennas at the receivers, in particular at the base stations. The increased number of antennas clearly leads to a proportionally larger number of channel parameters. Moreover, the higher the number of parameters to be estimated, the higher the computational complexity of the estimation. Thus, the problem of designing accurate channel estimation techniques with relatively short training sequences and with a limited computational burden is of paramount importance.

The problem of estimating the up-link channel in time slotted systems has been classically solved by using a slot-by-slot approach.

A commonly used technique to this aim is known as the "least squares estimate" (LSE). Such technique is based on the determination of a number of parameters only depending on the system characteristics and not on the channel characteristics (in particular, the number of antenna elements and the length of the temporal support of the impulse response). The result of the estimation for a given user is a matrix of M x W elements, where M is the number of antenna elements and W is the length of the temporal support of the impulse response. Yet, in such a matrix, a lot of samples only represent noise, and this negatively affects the accuracy of the estimate.

In principle, the accuracy of the estimate can be increased by an average over multiple slots, what is equivalent to considering training sequences that are apparently longer than provided by the standards. Since the white Gaussian noise has zero mean value, averaging yields a considerable reduction of the noise power. Yet, this choice leads to averaging also the impulse response, and thus it has good performance only under very restrictive assumptions about the mobility of the terminal. Therefore, this choice is not able to cope even with relatively slow fading variations, this being the most common situation in mobile communication.

Another approach to improve the accuracy of that technique is based on reducing the number of unknown parameters through the exploitation of the so-called Reduced-Complexity (RC) properties of the space-time channel. In short, the Reduced-Complexity approach aims at distinguishing, in the channel matrix, the samples actually corresponding to the useful signal from those corresponding to noise. Once they have been identified, they can be cancelled in some manner.

Different documents concerning Reduced-Complexity filtering implementation techniques have been published. One of such techniques is based on the determination of the possible directions and instants of arrival of the signal that can be distinguished by a system. That technique is disclosed for instance in the articles "Low-rank adaptive filters", by P. Strobach, IEEE Transactions on Signal Processing, Vol. 44, No. 12, pages 2032 to 2947, December 1996, "Fast, Rank Adaptive Subspace Tracking and Applications", by D.J. Rabideau, ibid., Vol. 44, No. 9, pages 2229 to 2244, and "Projection Approximation Subspace Tracking" by B. Yang, ibid., Vol. 43, No. 1, pages 95 to 107. The documents however deal only with the general problem of signal recognition in the presence of noise and do not provide indications allowing the application of the described algorithms to fast time-varying channels, like the channels of a mobile communication system.

A solution based on the same technique and designed for mobile communication system is disclosed in the article "Estimation of Multipath Parameters in Wireless Communication", by M.C. Vanderveen et al., IEEE Transactions on Signal Processing, Vol. 46, No. 12, pages 682 to 690, March 1998. That known solution applies a multi-slot observation starting from the consideration that, while the signal power fluctuates, the directions of arrival (DOA) and the delays in the arrival (times of arrival, TOA) can be considered stationary over multiple slots. Thus, according to the paper, the DOA's and the TOA's are computed and are used for a space-time filtering of the results of the LSE estimation. Determining the DOA's and TOA's entails a very heavy computational burden, and thus also that prior art solution is not satisfactory.

SUMMARY OF THE INVENTION

Taking this into account, it is an object of the invention to provide an improved method of estimating the transmission channel of a digital radio communication system, in particular the up-link channel of a mobile communication system, which method combines a multi-slot observation with a Reduced-Complexity approach and does not require a heavy computational burden.

This object is attained by the method as disclosed in the appended claims 1 to 14.

More particularly, according to the invention, there is provided a method which exploits the stationarity (or slow variability) of the spatial and temporal subspaces occupied by the signal during an estimation window and provides for a projection of the LSE estimation on said subspaces, without need of actually computing the individual DOA's and TOA's.

It is another object of the invention to provide a device for carrying out the method, as claimed in claims 15 to 30.

It is a further object of the invention to provide a method of decoding data at a receiver of a digital radio communication system in which the data are decoded by using the channel estimation method and device according to the invention.

Yet another object of the innovation is to provide a receiver for a slotted radio communication system, in particular for a base station of a mobile communication system, including the device for channel estimation according to the invention.

BRIEF DESCRIPTION OF THE DRAWINGS

The invention will be now described in greater detail with reference to the accompanying drawings, in which:

- Fig. 1 is a simplified diagram of a mobile communication system in which the invention is applied;
- Figs. 2A to 2D are graphical representations of the data arriving at a multiple antenna and of the channel matrix, showing the effects of the invention;
- Fig. 3 is a flow chart of the method according to the invention;
- Fig. 4 is a general block-diagram of an equipment for carrying out the method; and
- Fig. 5 is a block diagram of a multi-frame processing unit of the equipment shown in Fig. 4.

DESCRIPTION OF THE PREFERRED EMBODIMENT OF THE INVENTION

Before describing in detail the preferred embodiments of the invention, the environment where the same is employed and the mathematical considerations upon which it is based will be shortly disclosed. For sake of clarity, where necessary, reference is made to a TD-SCDMA transmission.

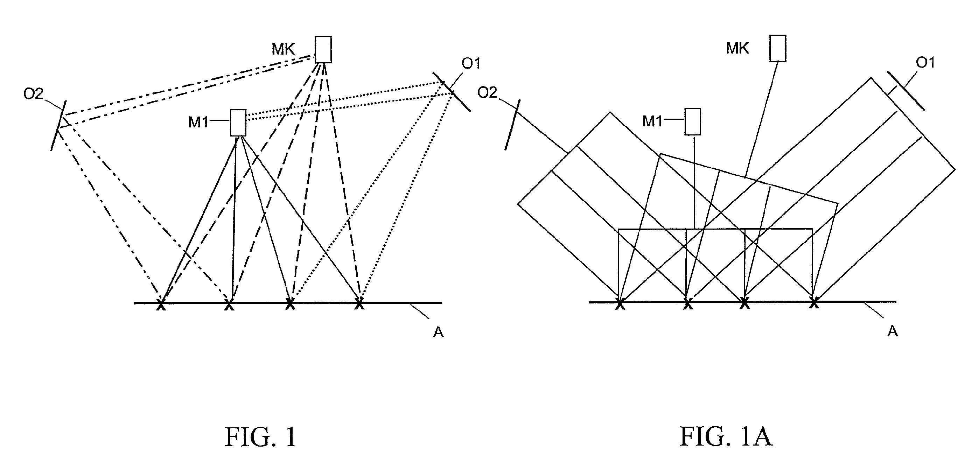

Fig. 1 shows the transmission paths from the mobile stations to the base station in a cell of a mobile communication system. The base station is schematised by a multiple antenna A with M antenna elements (four of which are shown in the drawing). A plurality of mobile terminals, two of which, M1 and MK, are shown in the drawing, is assumed to be simultaneously active in the cell. It should be determined that, because of the long distance existing between the multiple antenna A and both the mobile terminals M and the scatterers O, all the antenna elements see the rays generated from a terminal or a scatterer under the same angle of arrival, as specified in Fig 1A.

In case of TDMA system, signal transmission is organised in frames having a slot for each active terminal. Each slot is divided into a guard period, a first period allotted to a first portion of the data to be transmitted, a period allotted to a user-specific training sequence (midamble) used for channel estimation, and a second data period allotted to the remaining data portion. If a CDMA technique is applied, terminals' signals are convoluted with different orthogonal codes, resulting in a bandwidth spreading of the signal, and they can share the same slot as far as orthogonal codes are available. Each antenna element will receive, from each terminal, signals having propagated along a plurality of paths. One of said paths (solid line for terminal M1 and dashed line for terminal MK) is a direct path and other ones (dotted lines for terminal M1 and dotted and dashed lines for terminal MK) are generated because of scattering by obstacles encountered by the radio waves during their propagation. Two such obstacles, denoted O1, 02, are shown in the drawing and their effect is shown as a simple reflection of the signal. Each path is characterised by a direction or angle of arrival, a delay and a complex amplitude. The amplitudes can be considered quasi-stationary within the duration of the burst transmitted by a terminal in its slot, while the variations of angles and delays can be modelled as quasi-static in a larger time scale that depends on terminal mobility. In other words, the variations of the angles and delays in an interval that can span over L slots are lower than the angular and temporal resolution, respectively, of the receiver. This quasi stationarity is exploited by the invention to provide an accurate estimation method that does not require an excessive computational burden.

Notice that the angular resolution depends on the aperture of multiple antenna while the temporal resolution is approximately given by the inverse of the signal bandwidth.

As a simplifying assumption in the presentation of the mathematical aspects of the method, we will consider at first that every L slots the angles and delays change to new independent values. As an example, for the up-link of a TD-SCDMA system, where the frame interval has a duration of 10ms, with an array of 8 half-wavelength spaced elements and a mobile terminal at distance of 500 m from the base station, the angles and delays can be considered stationary within L = 40 slots, provided that the velocity of the mobile terminal is less than 500 Km/h.

That being stated, at each antenna element and for each user, the base-band received signal in the *l*-th frame, submitted to chip matched filtering and sampled at the chip rate, can be modelled by vector:

$$y(t;l) = \sum_i x(i;l)h(t - iT;l) + n(t;l) \qquad (1)$$

where:

- t denotes the time variable within the time-slot of the frame,
- $x(i;l)$ denotes the i-th symbol of the transmitted sequence (either information or training data) at rate 1/T, T being the chip period;
- vector $h(t;l)$ is the impulse response of the space-time channel from a mobile terminal to an antenna element; and
- vector $n(t;l)$ indicates both the co-channel interference and the background noise, the latter being temporally uncorrelated but spatially correlated.

As already stated, channel estimation is carried out in correspondence of the midamble (by neglecting the first W-1 samples of the received signal that, denoting by W the length of the temporal support of the impulse response, would be affected by intersymbol interference with the data). Thus, in case of a multiple antenna of M elements and of training sequences of length N+W-1 (thus of useful length N), the received data can be expressed by the standard relation

$$Y(l) = H(l)X(l) + N(l) \qquad (2)$$

*where* $Y(l)$ is a matrix with M rows and N columns, $H(l)$ is the M x W space-time channel matrix, $X(l)$ is the W x N convolution matrix of the channel with the training sequence (of length N) and $N(l)$ is the noise matrix. The above indications about the sizes of $H(l)$ and $X(l)$ refer to a single user. The noise $N(l)$ is Gaussian, temporally uncorrelated but spatially correlated, with a covariance

$$E[n(iT;l)\, n((i + m)T;l)] = Q\delta(m) \qquad (3)$$

where δ is the Dirac function.

The skilled in the art knows that, from relation (2), the unconstrained (or full-rank) Maximum-Likelihood estimate of the channel and the noise covariance matrix (carried out from a multi-slot observation) can be expressed as:

$$H_u(l) = R_{yx}(l)R_{xx}^{-1} \qquad (4)$$

$$Q_u = \frac{1}{NL} \sum_{l=1}^{L} \left( R_{yy}(l) - R_{yx}(l) R_{xx}^{-1} R_{yx}^{H}(l) \right) \qquad (5)$$

where $R_{yx}(l)$ $R_{yy}(l)$ $R_{XX}$ are sample covariance matrix defined as follows: $R_{xx} = X(l)X(l)^H / N$, $R_{yx}(l) = Y(l)X(l)^H / N$ and $R_{yy}(l) = Y(l)Y(l)^H / N$. Notice that the training sequence covariance matrix $R_{XX}$ is assumed independent of the slot.

As usual, prime "H" denotes conjugate transpose of the concerned matrix. "Unconstrained" or "full-rank" means that the relevant matrix has the full size, i. e. M x W.

Taking into account that $R_{xx} = X(l)X(l)^H / N$, $R_{yx}(l) = Y(l)X(l)^H / N$ and $R_{yy}(l) = Y(l)Y(l)^H / N$, relations (4), (5) can also be written

$$H_u(l) = Y(l)X(l)^H [X(l)X(l)^H]^{-1} \qquad (4')$$

$$Q_u = \frac{1}{NL} \sum_{l=1}^{L} [Y(l) - H(l)X(l)] \cdot [Y(l) - H(l)X(l)]^H \qquad (5')$$

This notation better shows the operations carried out on the received signals.

In a multi-user approach (K users), if users' training sequences are correlated, the optimum solution for MLE problem cannot be reduced to K separate optimization due to the existence of a multiple access interference (MAI), so that a joint estimation technique has to be considered. A possible sub-optimum solution based on successive cancellation can be derived from the one proposed for data in the book "Multiuser detection", by S. Verdu', Cambridge University Press, 1998.

Within the considered set of L consecutive bursts, the channel can be modelled as a combination of P paths (see Fig. 1), each of them characterised by a delay $\tau$, an angle $\alpha$ and an amplitude $\beta$ that accounts for the fading variations. Thus, the impulse response vector $h(t;l)$ can be written:

$$h(t;l) = \sum_{p=1}^{P} \beta_p(l)a(\alpha_p)g(t - \tau_p) \qquad (6)$$

where $a(\alpha)$ is the multiple antenna response to a plain wave impinging at angle $\alpha$ and g(t) is the convolution of the transmitted pulse and the matched filter at the receiver. The space-time channel matrix $H(l)$ can in turn be written:

$$H(l) = \sum_{p=1}^{P} \beta_p(l)a(\alpha_p)g^T(\tau_p) = AB(l)G^T \qquad (7)$$

where, as usual, prime "T" denotes the transpose of the concerned matrix.

As stated before, in model (6) the angles and the delays can be assumed slot-independent, i.e. their variations within the L slots are assumed to be smaller than the angular-temporal resolution. The propagation channel is time-varying, hence the amplitudes are slot-dependent according to a fading process which is uncorrelated over a certain number of slots or even from slot to slot. Since the explicit estimation of angles and delays from the multi-slot measurement is computationally prohibitive, the invention provides for translating the slot-invariance for angles and delays into the stationarity of the corresponding spatial and temporal subspaces. To this end, first, the spatial and temporal subspaces are computed from the least squares estimations (LSE) relative to the L processed slots. Then, the refined multi-slot estimate is obtained by projecting the LSE onto the subspaces.

In order to model the subspaces, the spatial and temporal correlation matrix of the multi-slot channel

$$R_S(L) = \frac{1}{L}\sum_{l=1}^{L} H(l) \cdot H(l)^H \tag{8}$$

$$R_T(L) = \frac{1}{L}\sum_{l=1}^{L} H(l)^H \cdot H(l) \tag{9}$$

should be considered.

Matrices $R_S(L)$, $R_T(L)$ are assumed to have ranks $r_S(L)$, $r_T(L)$ respectively, which correspond to the signal DOA's and TOA's that actually are distinguished during the L-slot observation. Given the orthonormal bases $U_S$ and $U_T$ for the column space of the correlation matrices, the channel matrix can be parameterised as:

$$H(l) = U_S\Gamma(l)U_T^H \tag{10}$$

where $U_S$ and $U_T$ are matrices of dimension $M \times r_S(L)$ and $W \times r_T(L)$ respectively, matrices containing the quasi-stationary or slot-independent information (i.e. the information related to the angles and the delays), and $\Gamma(l)$ contains the amplitude-related information, which are slot-dependent due to the fading process. Matrices $U_S$ and $U_T$ are the matrices generating the spatial and temporal subspaces R{$U_S$}, R{$U_T$} having dimensions $r_S(L) \leq r_S$ and $r_T(L) \leq r_T$, where $r_S$, $r_T$ represent the number of paths and delays that are resolvable by the system within the interval of L frames.

It is to be appreciated that, for a finite number of slots L, the structure of the sample correlation matrices (and therefore $U_S$ and $U_T$) can no longer be ascribed to angle-delay pattern only. The interaction between the faded amplitudes can make the spatial and temporal subspaces interfere with each other so that their dimensions are smaller than the diversity orders. By using the parameterisation $U_S$, $U_T$ relation (2) can be rewritten:

$$Y(l) = U_S\Gamma(l)U_T^H X(l) + N(l) \tag{11}$$

The spatial covariance matrix of thermal noise and inter-cell interference is not known. Both $Q$ and the correlation of the training sequence $R_{xx}$ are assumed to be constant over the L slots.

For an accurate determination of the subspaces, the noise correlation and the non-perfect orthogonality of the training sequences are to be taken into account. This is done through a spatial and temporal whitening process resulting in a whitened estimate expressed as:

$$\widetilde{H}_u(l) = Q_u^{-H/2} H_u(l) R_{xx}^{H/2} \tag{12}$$

The subspace determination requires a model order estimation, carried out starting from the data. The model order selection requires finding the best trade-off between distortion due to under-parameterisation and the variance of the limited training sequence length, in the sense of minimising the mean square error.

Techniques like the Rissanen Minimum Description Length (MDL) criterion or the Akaike Information Criterion (AIC) can be adopted.

The whitened spatial and temporal correlation matrices are estimated from the whitened unconstrained channel estimate (12) as in (8) (9):

$$\widetilde{R}_S(L) = \frac{1}{L}\sum_{l=1}^{L} \widetilde{H}_u(l) \cdot \widetilde{H}_u(l)^H \tag{13}$$

$$\widetilde{R}_T(L) = \frac{1}{L} \sum_{l=1}^{L} \widetilde{H}_u(l)^H \cdot \widetilde{H}_u(l) . \tag{14}$$

The $r_S(L)$ leading eigenvectors of

$$\widetilde{R}_S(L)\ (\widetilde{U}_S),$$

and the $r_T(L)$ leading eigenvectors of

$$\widetilde{R}_T(L)\ (\widetilde{U}_T)$$

are then used to generate the spatial and temporal projectors according to the following expressions:

$$\hat{\Pi}_S = \widetilde{U}_S \widetilde{U}_S^{\dagger} \tag{15}$$

$$\hat{\Pi}_T = \widetilde{U}_T \widetilde{U}_T^{\dagger} . \tag{16}$$

The prime "†" denotes the pseudo-inverse of the concerned matrix (the subspace matrices are not square matrices, so that a true inversion is not possible).

By applying the estimated projectors to the whitened unconstrained channel estimate and subsequently de-whitening the matrix resulting from the projection, the multi-slot space-time (MS-ST) estimate (refined estimate) of the channel matrix is expressed by:

$$\hat{H}(l) = Q_u^{H/2} \hat{\Pi}_S \widetilde{H}_u(l) \hat{\Pi}_T R_{xx}^{-H/2} . \tag{17}$$

In summary, the method consists in the projection of the whitened LSE onto the spatial and temporal subspaces obtained as the span of the first $r_S(L)$ (and $r_T(L)$) eigenvectors of the estimated spatial

$$\widetilde{R}_S(L)$$

(and temporal

$$\widetilde{R}_T(L))$$

correlation matrix. The projection "depresses" all elements in the received bursts that have spatial/temporal characteristics different from actual signal. It is important to note that no explicit determination of the angles and delays has to be performed, so that the method has a reduced computational burden.

Notice that the temporal projection could be conveniently neglected in a dense multipath radio environment, where the degree of temporal diversity could be as large as the support of the channel (i.e. the temporal order rises to $r_T(L) \cong W$). Dually, for a large angle spread and/or a small number of antenna elements M ($r_S(L) \cong M$), it could be advisable not to use the spatial projection.

However, in mobile communication systems, $r_S(L) < M$ and, especially in wide-band systems, $r_T(L) << W$, so that the projection of the LSE on both subspaces will be the most frequent case.

For mobile users moving at high speed the estimate obtained from the training sequence needs to be updated over the slot interval. This can be performed by tracking the fast varying channel components on the base of the decided symbols. Adaptive techniques for tracking of the fading amplitudes are available in literature, based for example on linear regression. With reference to the multi-slot technique the intra-slot tracking can be performed on the unconstrained channel estimation

$$\tilde{H}_u$$

and then the projection computed on the same subspaces $\hat{u}_s$ e $\hat{n}_r$ obtained in (15) and (16).

The implementation of the multi-slot technique as disclosed hereinbefore (batch implementation) implies a certain latency in providing the channel estimate (approximately L/2 slots, in that the average should be centred on the slot to be decoded, and thus would exploit the previous and the subsequent L/2 slots) and might be too demanding in terms of computational complexity. Moreover, it has been assumed that angles and delays have to be recomputed every L slots.

An alternative implementation (subspace tracking implementation) that allows cancelling the latency and alleviating the computational burden consists in updating the spatial and temporal subspace on a slot-by-slot basis through a subspace tracking technique. In this way, angles and delays are allowed to vary continuously (but still slowly), and this is no doubt a more realistic situation. During subspace tracking, also a model order updating is performed.

A slot-by-slot update can be applied even to the computation of the spatial covariance matrix that in the preceding approach has been considered constant over the estimation window.

The concepts of subspaces, rank reduction and projection can be readily understood from the following short explanation, which considers the spatial subspace only but applies identically to the temporal subspace. Assuming that the multiple antenna covers a sector of D° with a d° resolution, theoretically, the signal could occupy a subspace of D/d dimensions, i. e. it can distinguish D/d DOA's. If however, in the L slots considered, the signal arrives according to a limited number $r_S$ of angles, the subspace actually occupied is $r_S$-dimensional. If moreover, during the L-slot observation window, it is detected that for some of the $r_S$ angles the signal is strongly attenuated and tends to become confused with the noise, a subspace of dimension $r_S(L)$ needs only to be considered. Assuming now to represent each direction by a vector and proceeding according to a geometrical interpretation, it is possible to state that, if no signal component is seen in certain directions, the projection of the vector identifying a signal DOA has a null component on the vectors identifying directions that do not correspond to any actual DOA. By the projection, in practice, non-null components can be identified, even if no computation thereof is required.

In other words, in the ideal case of noise absence, what is received on the M antenna elements is a linear combination of contributions coming from only $r_S$ directions. When computing $\mathbf{R}_S(L)$, a M x M matrix would be obtained, but indeed only $r_S$ spatial contributions are due to the signal. The noise leads to deem that M contributions are present, but M - $r_S$ are noise components. Thus, projecting the LSE estimate (which would take into account all D/d distinguishable directions) on the spatial subspace corresponds to taking into account only the $r_S$ vectors identifying the actual DOA's. Thus a matrix M x $r_S$ is to be considered ($\mathbf{U}_S$).

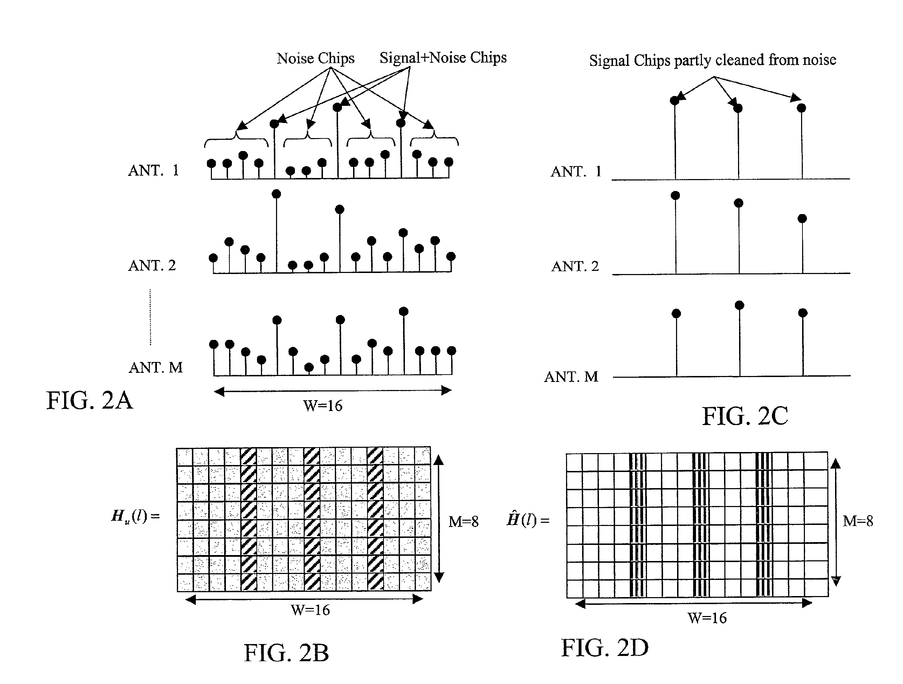

The effects of the invention can be appreciated from Figs. 2A to 2D. Fig. 2A shows a sequence of W = 16 chips arriving at the M antenna elements. It is assumed that chips 1 to 4, 6 to 8, 10 to 12 and 14 to 16 are only noise, whereas the remaining chips contain signal and noise. The LSE estimation matrix **H** (for M = 8) is therefore as shown in Fig. 2B, the grey boxes representing noise. Upon application of the projection according to the invention (see Fig. 2C) the noise chips can be identified and neglected. The refined multi-slot estimate matrix is thus as shown in Fig. 2D.

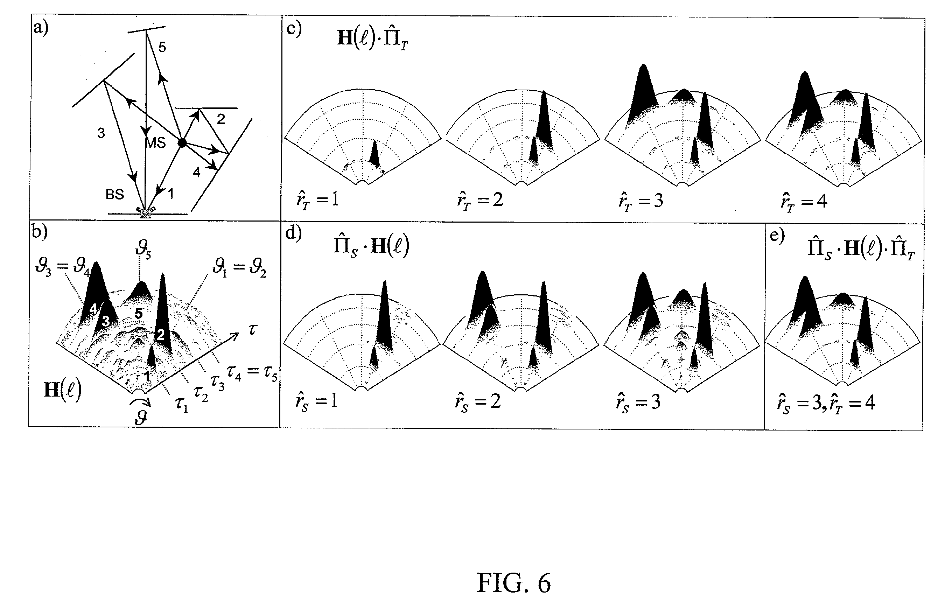

A three-dimensional representation of the effects on the unconstrained channel estimation of any principal operation realised by the proposed technique is reported in Fig. 6.

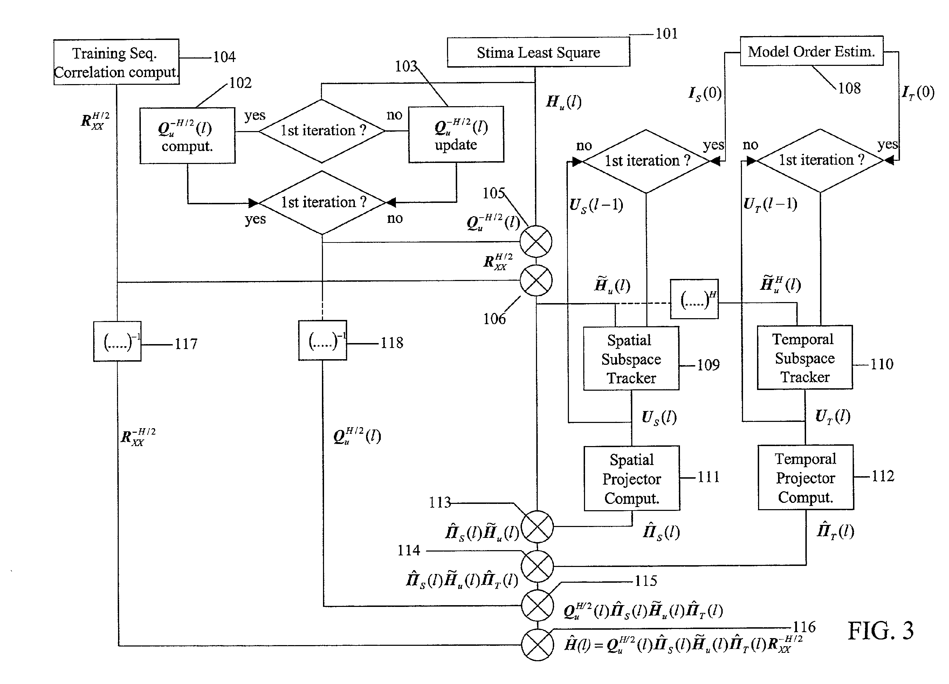

Turning now to Fig. 3, the method is depicted for the I-th slot. The first step 101 is the least squares estimation. That estimation is performed in known manner, for instance as described in the document "Low Cost Channel Estimation in the Uplink receiver of CDMA Mobile Radio Systems", by B. Steiner and P.W. Baier, Frequenz, 47 (1993), 11 - 12, pages 292 - 298. After having computed the LSE, if the slot considered is the first one (first iteration) the noise covariance matrix is computed (step 102) from the residual of the Least squares estimation (see relations 5'). At the subsequent iterations an update of the previously computed covariance matrix is carried out (step 103), e. g. through an updating of the Cholesky factor. Cholesky factorisation is a well-known concept in the matrix field, see e. g. the book "Matrix computations", by G.H. Golub and C.F. Van Loan, John Hopkins University Press, 3rd edition, 1996.

At the same time, time correlation $\mathbf{R}_{xx}^{H/2}$ of the training sequence is computed (step 104).

The whitened estimate

$$\tilde{H}_u(l)$$

according to relation (12) is then computed. This is indicated by multipliers 105, 106, which are fed, with the least squares estimate

$$\tilde{H}_u(l)$$

and the computed or updated covariance matrix or respectively with the correlation. It is to be noted that spatial whitening is not necessary in case of interferers uniformly distributed on the sector covered by multiple antenna. Moreover, in most cases the improvement in the performance afforded by the temporal whitening is not justified by the increase in the computational burden, so that this step could be generally dispensed with.

Once obtained the whitened estimate, the spatial and temporal subspaces can be determined (steps 108 to 110). The relevant algorithms receive, as input, whitened estimate

$$\tilde{H}_u(l)$$

and its Hermitian transpose. Conjugate transposition is indicated by "$(...)^H$" (step 107).

For determination of the subspaces an initial model order estimation is performed (step 108) starting from the data. This results in identity matrices $I_S(0)$, $I_T(0)$ having sizes $r_S(l) \times r_S(l)$, $r_T(l) \times r_T(l)$. The identity matrices allow determining the initial values

$$U_S(0) = \begin{bmatrix} I_S(0) \\ \mathbf{0} \end{bmatrix}, \quad U_T(0) = \begin{bmatrix} I_T(0) \\ \mathbf{0} \end{bmatrix}$$

of the spatial and temporal subspace matrices.

A subspace tracking is performed (steps 109, 110) at each slot.

The tracking algorithm adopted takes account of the observations made on the previous L slots by weighting each observation with a factor which exponentially decrease form the most recent one to the oldest one. The tracking also entails updating the ranks of the subspaces that is why $r_S$, $r_T$ are function of l and no more of L. Subspace tracking with adaptation of the rank order can be performed by any of the algorithms known in the literature (see in particular the articles by D.J. Rabideau mentioned in the introduction of the specification).

Subsequently the spatial and temporal projectors are computed (steps 111, 112), and then the unconstrained whitened estimate is projected onto the subspaces. The projection steps are schematised by multipliers 113, 114.

Lastly, if whitening was performed, a de-whitening (colouring) of the refined multi-slot estimate resulting from the projection is performed (multipliers 115, 116). Of course, this requires using the inverted autocorrelation matrix and noise covariance matrix. Inversion is indicated by "$(....)^{-1}$" in steps 117, 118.

Thus, the requested refined estimate of equation (17) is finally obtained.

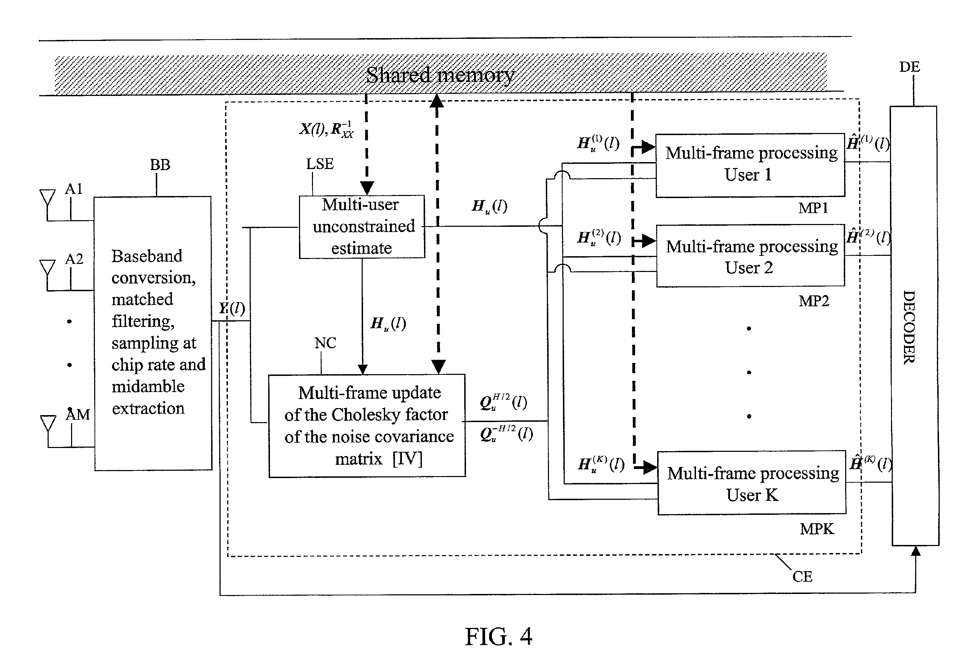

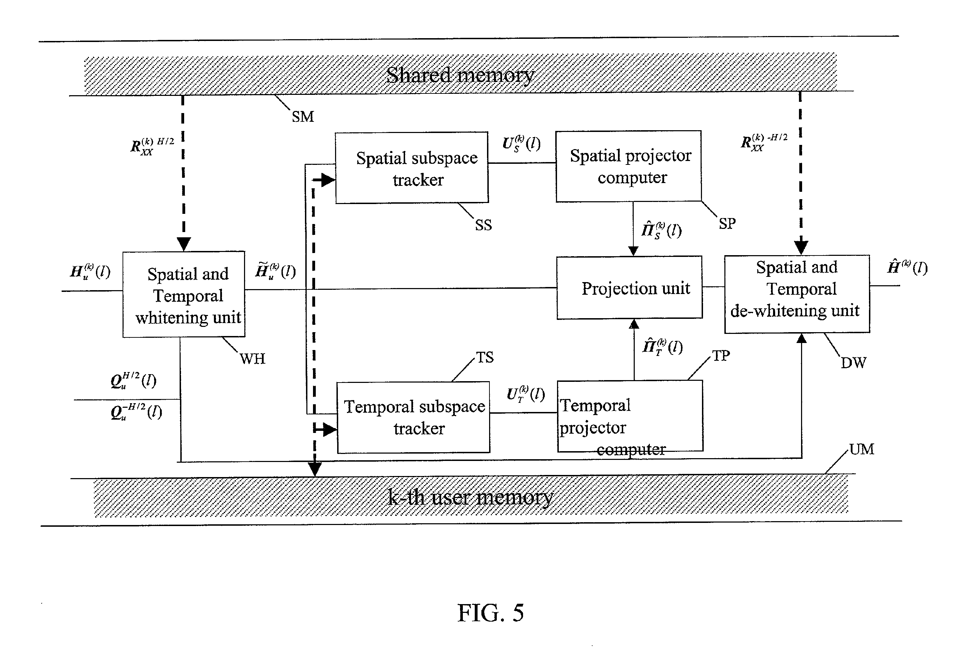

A possible implementation of the device for carrying out the method is disclosed with reference to the block diagrams of Figs. 4 and 5.

Fig. 4 shows a simplified block diagram of the receiver of a base station of a mobile communication system embodying the invention.

The receiver has a multiple antenna of M elements A1...AM which are connected to an input block BB, which performs the whole of the operations of baseband conversion, matched filtering, sampling at chip rate and midamble extraction on the received burst signals.

The output of block BB is connected to decoder DE and to channel estimator CE (enclosed in the dashed-line block), which is the subject matter of the invention and supplies decoder DE, at each frame and for each user, with the refined multi-slot channel estimate.

In block CE, a first processing unit (correlator) LSE carries out a multi-user unconstrained estimation of the channel and a unit NC computes and updates the noise covariance matrix. Both units are fed with the received signals Y by block BB, and with the necessary information about the training sequence and its correlation [see relations (4') and (5')] from a memory SM, shared among all users. The two blocks operate on the training sequences from all users, because of the imperfect orthogonality of such sequences.

The outputs of blocks LSE and NC are connected to a plurality of multi-frame processors MP1, MP2...MPK, each associated with one of the K active users, that carry out the refinement of the least squares estimate through its projection onto the spatial and temporal subspaces, as disclosed in the method, and provide decoder DE with the improved channel estimate for the respective user.

The structure of a generic processor MPk is disclosed in Fig. 5.

Spatial and temporal whitening filters, jointly shown by block WH, receives the least squares estimate and the noise covariance from blocks LSE and NC (Fig. 4), respectively, and the correlation of the training sequence of the respective user from shared memory SM, and emit the whitened, unconstrained channel estimate for the respective user. The whitened estimate is sent to spatial and temporal subspace trackers SS, TS that determine and update slot-by-slot the spatial and temporal subspaces and the respective ranks. For their operation, subspace trackers SS, TS cooperate with a memory UM specific to the user.

The subspace matrices computed by blocks SS, TS are fed to blocks SP, TP computing the spatial and temporal projectors $\Pi_S^{(k)}$, $\Pi_T^{(k)}$ respectively. Taking into account the definition of projector, blocks SP, TP comprise processing units arranged to compute the pseudo-inverse matrices $\boldsymbol{U}^\dagger$ and to carry out the products $\boldsymbol{U} \times \boldsymbol{U}^\dagger$. The outputs of blocks SP, TP are connected to projection computing unit PR that receives the whitened unconstrained estimate and projects it onto the subspaces, generating the refined estimate $\hat{\tilde{H}}^{(k)}(l)$.

Projection computing unit PR is then followed by spatial and temporal de-whitening filters DW, which receive the whitened refined estimate and perform thereon the inverse processing of that performed by whitening filters WH on the unconstrained estimate. Also the inverse matrices $\boldsymbol{R}_{xx}^{(k)-H/2}$, $\boldsymbol{Q}_u^{H/2}$ of those used by whitening filters WH are provided from shared memory SM and noise covariance computing unit NC (fig. 4), respectively.

Of course, the skilled in the art will appreciate that the channel estimator CE would be part of the processing units of the base transceiver station.

It is clear that the above description has been given only by way of non-limiting example and that changes and modifications are possible without departing from the scope of the invention. In particular, even if the slots in the preceding description have been identified with the frames of a time division transmission (TDMA or TD-SCDMA), the method may be applied unchanged for a channel estimation which takes into account the observation over multiple symbol periods (for example, OFDM). An estimation over multiple symbol periods allows application of the invention also to digital transmission systems other than those exploiting time division techniques, e. g. systems based on frequency division multiple access, multi-carrier modulation, orthogonal frequency division multiplexing etc.

Moreover, even if reference has been made to a training sequence, the invention can be applied whenever the transmitted data contain pilot symbols in predetermined positions.

**Claims**

1. A method of estimating a fast-varying data transmission channel at a receiver of a digital radio communication system, where data transmitted by one or more active stations (M1...MK) arrive at a multiple antenna (A, A1...AM) according to a multipath propagation, the method comprising the steps of:

   - obtaining an unconstrained channel estimate by exploiting training symbols included in predetermined positions in the data flow, and
   - refining such unconstrained estimate by exploiting parameters related with the spatial and temporal structure of the received data, which parameters are quasi-stationary or slowly varying over an observation window comprising a plurality of consecutive observation periods, in order to reduce the noise contents of the estimate,

   the method being **characterised in that** said refining step comprises, for the or each active user:

   - extracting from said unconstrained estimate, at each observation period, spatial and temporal subspaces associated with said quasi-stationary or slowly varying parameters, the extraction carried out during an observation period taking into account the subspaces extracted in a number of preceding observation periods;
   - determining, from said spatial and temporal subspaces, spatial and temporal projectors for the projection of said unconstrained estimate onto said spatial and temporal subspaces; and
   - projecting said unconstrained estimate onto at least one of said spatial and temporal subspaces, thereby generating a refined estimation based on observations for said number of observation periods.

2. A method as claimed in claim 1, **characterised in that** said projecting step includes:

- projecting said unconstrained estimate on both said spatial and temporal subspaces, when said spatial and temporal diversity have degrees significantly lower than a number (M) of antenna elements and a length (W) of a temporal support of the impulse response, respectively;
- projecting said unconstrained estimate on said spatial subspace only, when the degree of temporal diversity is close to the length (W) of the temporal support of the channel;
- projecting said unconstrained estimate on said temporal subspace only, when the degree of spatial diversity is close to the number (M) of antenna elements.

3. A method as claimed in claim 1 **characterised in that** said unconstrained channel estimate step includes a multiple access interference (MAI) cancellation.

4. A method as claimed in claim 1 or 2, **characterised in that** said subspace extracting step includes a subspace tracking effected at every observation period (subspace tracking implementation).

5. A method as claimed in claim 4, **characterised in that** said subspace extracting step includes a determination of a rank order of each subspace, and said subspace tracking includes also a tracking of said rank orders.

6. A method as claimed in claim 1 or 2, **characterised in that** said subspace extracting step is performed at every observation window.

7. A method as claimed in any preceding claim, **characterised in that** it includes a spatial whitening of the unconstrained estimate before said subspace extracting step, and a spatial de-whitening of the refined estimate after said projecting step.

8. A method as claimed in claim 7 when referred to any of claims 4 to 6, **characterised in that** said spatial whitening is performed by using information on spatial covariance of the training symbols updated at every observation period.

9. A method as claimed in claim 7 when referred to claim 6, **characterised in that** said spatial whitening is performed by using information on noise covariance averaged over said observation window (batch implementation).

10. A method as claimed in any preceding claim, **characterised in that** it includes a temporal whitening of the unconstrained estimate before said subspace extracting step, and a temporal de-whitening of the refined estimate after said projecting step.

11. A method as claimed in any preceding claim, wherein said radio transmission channel is allotted to the users according to time division multiple access techniques, **characterised in that** said observation window spans over a plurality of consecutive frames and each observation period corresponds with a slot allotted to a user in a frame.

12. A method as claimed in any claims 1 to 11, **characterised in that** said unconstrained estimate is updated through intra-slot tracking algorithm.

13. A method as claimed in any of claims 1 to 11, **characterised in that** each observation period corresponds with the period allotted to a data symbol for decoding in the receiver.

14. A method as claimed in any preceding claim, **characterised in that** said channel is the up-link channel of a digital mobile communication system.

15. A device for estimating a fast-varying radio transmission channel at a receiver of a digital communication system, where data transmitted by one or more active stations (M1...MK) arrive at a multiple antenna (A, A1...AM) in such receiver according to a multipath propagation, the device (CE) comprising:

- correlating means (LSE) for determining an unconstrained channel estimate by exploiting training symbols included in predetermined positions in the data flow transmitted by each station (M1...MK), and
- means (MP1...MPK) for refining such unconstrained estimate by exploiting parameters related with the spatial and temporal diversity of the received data, which parameters are quasi-stationary or slowly varying over an observation window comprising a plurality of consecutive observation periods;

and being **characterised in that** said refining means (MP1...MPK) comprise:

- first and second processing means (SS, TS) for receiving said unconstrained channel estimate and extracting therefrom, at each observation period and for each active user (M1...MK), a spatial and a temporal subspace associated with said quasi-stationary or slowly varying parameters, the first and second processing means (SS, TS) performing the extraction, during an observation period, taking into account the subspaces extracted in a number of preceding observation periods;
- third and fourth processing means (SP, TP), respectively connected downstream said first and second processing means (SS, TS), for receiving matrices representative of said spatial and temporal subspaces and computing therefrom a spatial and a temporal projector for the respective user;
- fifth processing means (PR) having inputs connected to outputs of said third and fourth processing means (SP, TP) and of said correlating means (LSE), for computing a projection of said unconstrained estimate on at least one of said subspaces, and supplying decoding means (DE) in the receiver with a refined channel estimate for the respective user.

16. A device as claimed in claim 15, **characterised in that** said fifth processing means (PR) are enabled to:

- project said unconstrained estimate on both said spatial and temporal subspaces, when said spatial and temporal diversity have degrees significantly lower than a number (M) of antenna elements and a length (W) of a temporal support of the impulse response, respectively;
- project said unconstrained estimate on said spatial subspace only, when the degree of temporal diversity is close to the length (W) of the temporal support of the channel;
- project said unconstrained estimate on said temporal subspace only, when the degree of spatial diversity is close to the number (M) of antenna elements (A1...AM).

17. A device as claimed in claim 15 or 16, **characterised in that** first and second processing means (SS, TS) are arranged to extract the subspaces at each observation period and to update such subspaces by taking into account the results of subspace extraction of the preceding observation period.

18. A device as claimed in claim 17, **characterised in that** first and second processing means (SS, TS) are arranged to compute, for subspace extraction in a first observation period, an initial value of the rank order of the respective subspace, and to update such rank orders while updating said subspaces.

19. A device as claimed in claim 15 or 16, **characterised in that** said first and second processing means (SS, TS) are arranged to extract the subspaces at every observation window.

20. A device as claimed in any of claim 14 to 18, **characterised in that** it further comprises sixth processing means (NC) connected to receive said training symbols arriving through the channel and a residual of the unconstrained estimate, and arranged to compute a noise covariance matrix of the received signal and the inverse thereof.

21. A device as claimed in claim 20, **characterised in that** said sixth processing means (NC) are arranged to update the noise covariance matrix at each observation period.

22. A device as claimed in claim 20, **characterised in that** said sixth processing means (NC) are arranged to compute the noise covariance matrix at every observation window, as an average of the noise covariance in all the observation periods in the window.

23. A device as claimed in any of claims 20 to 22, **characterised in that** said refining means (MP1...MPK) further comprises:

- first filter means (WH) connected upstream said first, second and fifth processing means (SS, TS, PR) and arranged to: receive said noise covariance matrix from said second processing means (NC) and said unconstrained estimate from said correlating means (LSE); to carry out a spatial whitening of said unconstrained estimate; and to supply the said first, second and fifth processing means (SS, TS, PR) with the whitened unconstrained estimate; and
- second filter means (DW) connected downstream said fifth processing means (PR) and arranged to receive said inverse noise covariance matrix from said sixth processing means (NC) and to carry out a spatial de-whitening of said refined estimate, to reintroduce therein the spectral characteristics of the received data.

24. A device as claimed in claim 23, **characterised in that** said first filter means (WH) are arranged also to perform a temporal whitening of the unconstrained estimate and second filter means (DW) are arranged also to perform a temporal whitening of the refined estimate.

25. A device as claimed in any of claims 15 to 24, wherein said radio transmission channel is allotted to the users according to time division multiple access techniques, **characterised in that** said observation window spans over a plurality of consecutive frames and each observation period corresponds with a slot allotted to a user in a frame.

26. A device as claimed in any of claims 15 to 24, **characterised in that** each observation period corresponds with the period allotted to a data symbol.

27. A device according to any of claims 15 to 26, **characterised in that** said receiver is the receiver of a base transceiver station of a mobile communication system.

28. A method of decoding data at a receiver of a digital radio-communication system, where data transmitted by one or more active stations (M1...MK) arrive at a multiple antenna (A, A1...AM) in such receiver according to a multipath propagation, **characterised in that** said decoding is based on a channel estimation carried out by the method of any of claims 1 to 13.

29. A receiver for a digital radio communication systems, comprising:

- at least a multiple antenna (A1...AM) for receiving data flows from a plurality of active users (M1...MK), the data from each user (M1...MK) including training symbols in predetermined positions in the flow;
- demodulating means (BB) for converting said data to baseband, sampling of the converted data and extracting the training symbols therefrom,
- a channel estimator (CE) for estimating the channel between each user and the receiver by using said training symbols; and
- a decoder (DE) connected to said demodulating means (BB) and said channel estimator (CE) for decoding the received data by filtering same with the channel response,

**characterised in that** said channel estimator (CE) is a device in accordance with any of claims 14 to 26.

30. A receiver as claimed in claim 29, **characterised in that** said receiver is a receiver of a base transceiver station of a mobile communication system.

FIG. 1A

FIG. 1

Noise Chips    Signal+Noise Chips

Signal Chips partly cleaned from noise

ANT. 1

ANT. 2

ANT. M

FIG. 2A

W=16

FIG. 2C

ANT. 1

ANT. 2

ANT. M

$H_u(l) =$

M=8

W=16

FIG. 2B

$\hat{H}(l) =$

M=8

W=16

FIG. 2D

FIG. 3

EP 1 357 714 A1

16

DE — DECODER

$\hat{H}^{(1)}(l)$ — Multi-frame processing User 1 — MP1

$\hat{H}^{(2)}(l)$ — Multi-frame processing User 2 — MP2

$\hat{H}^{(K)}(l)$ — Multi-frame processing User K — MPK

CE

$H_u^{(1)}(l)$

$H_u^{(2)}(l)$

$H_u^{(K)}(l)$

$H_u(l)$

$Q_u^{H/2}(l)$

$Q_u^{-H/2}(l)$

Shared memory

$X(l), R_{xx}^{-1}$ — LSE — Multi-user unconstrained estimate

$H_u(l)$

NC — Multi-frame update of the Cholesky factor of the noise covariance matrix [IV]

$X(l)$

BB — Baseband conversion, matched filtering, sampling at chip rate and midamble extraction

A1

A2

AM

**FIG. 4**

17

Shared memory

SM

$R_{XX}^{(k)\,H/2}$

$R_{XX}^{(k)\,-H/2}$

Spatial subspace tracker

$U_S^{(k)}(l)$

Spatial projector computer

SS

SP

$\hat{\Pi}_S^{(k)}(l)$

$H_u^{(k)}(l)$

Spatial and Temporal whitening unit

$\tilde{H}_u^{(k)}(l)$

Projection unit

Spatial and Temporal de-whitening unit

$\hat{H}^{(k)}(l)$

WH

DW

$Q_u^{H/2}(l)$

$Q_u^{-H/2}(l)$

$\hat{\Pi}_T^{(k)}(l)$

TS

TP

Temporal subspace tracker

$U_T^{(k)}(l)$

Temporal projector computer

UM

k-th user memory

FIG. 5

a)

b)

c) $\mathbf{H}(\ell) \cdot \hat{\Pi}_T$

$\hat{r}_T = 1$     $\hat{r}_T = 2$     $\hat{r}_T = 3$     $\hat{r}_T = 4$

d) $\hat{\Pi}_S \cdot \mathbf{H}(\ell)$

$\hat{r}_S = 1$     $\hat{r}_S = 2$     $\hat{r}_S = 3$

e) $\hat{\Pi}_S \cdot \mathbf{H}(\ell) \cdot \hat{\Pi}_T$

$\hat{r}_S = 3, \hat{r}_T = 4$

FIG. 6

EP 1 357 714 A1

19

## EUROPEAN SEARCH REPORT

European Patent
Office

**Application Number**

EP 02 42 5260

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | NICOLI M ET AL: "MULTIUSER SPACE-TIME CHANNEL ESTIMATION FOR CDMA UNDER REDUCED-RANK CONSTRAINT" PROCEEDINGS OF GLOBAL TELECOMMUNICATIONS CONFERENCE, SAN FRANCISCO, USA, 27 NOV.-1 DEC. 2000, IEEE, vol. 1, 27 November 2000 (2000-11-27), pages 147-151, XP002213044 Piscataway, USA * section II.C * --- | 1-30 | H04L25/02 H04L27/26 H04B1/707 |
| A | NICOLI M ET AL: "ADAPTIVE-RANK RECEIVER FOR SPACE-TIME DS CDMA SYSTEMS" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY: IEEE, US, vol. 1 OF 4. CONF. 53, 6 May 2001 (2001-05-06), pages 78-82, XP001066924 ISBN: 0-7803-6728-6 * section 3 * * page 81, first paragraph * ----- | 1-30 | |
| | | | **TECHNICAL FIELDS SEARCHED (Int.Cl.7)** H04L H04B |

The present search report has been drawn up for all claims

| Place of search | Date of completion of the search | Examiner |
|---|---|---|
| THE HAGUE | 10 September 2002 | Orozco Roura, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)